# FASCICULE DE BREVET EUROPEEN

(11) **EP 3 807 114 B1**
(45) Date de publication et mention de la délivrance du brevet: **29.06.2022**
(21) Numéro de dépôt: 19742828.7
(22) Date de dépôt: 24.05.2019
(51) Int. Cl.: B60K 15/01, F16L 31/02, F16L 27/08, B60K 15/03, B60K 15/067

(54) **RESERVOIR MUNI DE CANALISATIONS FACILITANT SON CONDITIONNEMENT**
BEHÄLTER MIT ROHREN ZUR ERLEICHTERUNG SEINER VERPACKUNG
TANK PROVIDED WITH PIPES TO FACILITATE THE PACKAGING THEREOF

(30) Priorité: 13.06.2018 FR 1855177
(43) Date de publication de la demande: 21.04.2021
(73) Titulaire: PSA Automobiles SA, 78300 Poissy (FR)
(72) Inventeur: LAFARGE, Jerome, 91630 MAROLLES EN HUREPOIX (FR); VIEUXBLED, Guillaume, 78140 VELIZY VILLACOUBLAY (FR)
(86) Numéro de dépôt international: PCT/FR2019/051204
(87) Numéro de publication internationale: WO 2019/239026

(56) Documents cités:
- CN-U- 201 941 584
- FR-A1- 3 036 663
- GB-A- 2 088 515
- JP-U- S63 192 127
- US-A1- 2011 220 644

## Description

La présente invention porte principalement sur un réservoir muni de canalisations facilitant son conditionnement. L'invention trouve une application particulièrement avantageuse avec les réservoirs à carburant. L'invention pourra toutefois également être mise en œuvre avec d'autres types de réservoirs, tels que des réservoirs contenant du liquide de dépollution.

Sur certains véhicules automobiles, le circuit à carburant basse pression est scindé en deux parties pour permettre la gestion des différents empattements des véhicules automobiles.

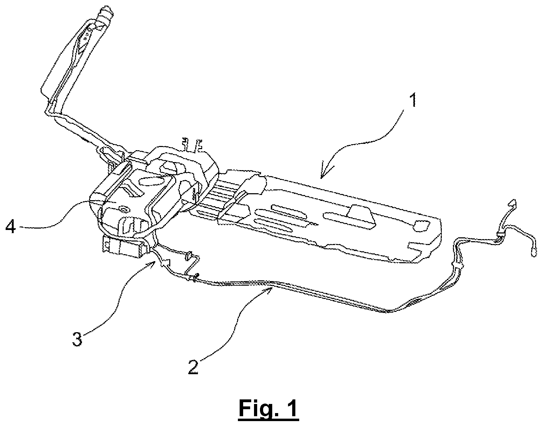

Comme cela est représenté sur la figure 1, le circuit 1 comporte d'un côté, des canalisations 2 qui s'étendent dans le brancard jusqu'à une interface avec le moteur thermique. D'un autre côté, des canalisations 3 sont livrées assemblées sur le réservoir 4 et sont destinées à être interconnectées avec les canalisations 2.

Afin de faciliter le conditionnement et la logistique, les canalisations 3 livrées montées sur le réservoir 4 sont munies de zones annelées. Ces zones annelées permettent de plier les canalisations avant leur montage sur le véhicule.

Toutefois, ces zones annelées posent des problèmes de conformité de parcours en générant des contacts non souhaités entre les canalisations de carburant et des pièces d'environnement du véhicule. En outre, il est difficile de maîtriser les épaisseurs dans les zones annelées, ce qui peut engendrer des défauts et notamment des fuites de carburant en cas de perçage.

Un réservoir de véhicule d'un type connu est divulgué par le document FR 3 036 663 A1.

L'invention vise à remédier efficacement aux inconvénients précités en proposant un réservoir de véhicule automobile comportant:
- une enveloppe, et
- une canalisation principale, le réservoir comportant en outre:
- une canalisation d'extrémité connectée à la canalisation principale par l'intermédiaire d'une interface encliquetable autorisant au moins un degré de rotation de la canalisation d'extrémité par rapport à la canalisation principale,
- de sorte que la canalisation d'extrémité peut passer sélectivement d'une position rangée dans laquelle la canalisation d'extrémité s'étend le long de l'enveloppe à une position de montage dans laquelle la canalisation d'extrémité est écartée de l'enveloppe.

L'invention permet ainsi, grâce à l'utilisation de l'interface encliquetable, de faciliter le rangement des canalisations lors d'une phase de conditionnement en mettant la canalisation d'extrémité en position rangée. L'invention permet en outre de mettre en attente, sans avoir à les plier, des canalisations lisses dont l'épaisseur est constante et maitrisée, ce qui évite les manipulations avec mise en contrainte et donc les risques potentiels de fuite de carburant. L'invention permet ainsi d'obtenir un gain en qualité de fonctionnement du véhicule automobile. L'invention procure également un gain de temps lors des manipulations des canalisations dans les phases de conditionnement et déconditionnement du réservoir lors de son montage en usine et le cas échéant lors d'opérations de maintenance.

Selon une réalisation, l'interface encliquetable est constituée d'un embout mâle associé à l'une des canalisations parmi la canalisation principale et la canalisation d'extrémité et destiné à s'insérer dans un embout femelle associé à l'autre des canalisations parmi la canalisation principale et la canalisation d'extrémité.

Selon une réalisation, l'interface encliquetable est droite.

Selon une réalisation, l'interface encliquetable est coudée, notamment d'un angle de 90°.

Selon une réalisation, l'interface encliquetable comporte un embout femelle coudé.

Selon une réalisation, l'interface encliquetable comporte un embout mâle coudé.

Selon une réalisation, l'interface encliquetable comporte une zone d'agrafage permettant d'assurer une fixation de la canalisation d'extrémité sur le réservoir.

Selon une réalisation, la canalisation principale est connectée à un module-jauge pompe.

Selon une réalisation, la canalisation d'extrémité est connectée à une canalisation d'alimentation d'un moteur thermique.

Selon une réalisation, le réservoir est un réservoir à carburant.

L'invention a également pour objet un véhicule automobile comportant un réservoir tel que précédemment défini.

L'invention sera mieux comprise à la lecture de la description qui suit et à l'examen des figures qui l'accompagnent. Ces figures ne sont données qu'à titre illustratif mais nullement limitatif de l'invention.

La figure 1, déjà décrite, est une vue en perspective illustrant une implantation d'un réservoir dans un véhicule automobile;

La figure 2a est une vue en perspective d'un réservoir de véhicule automobile selon la présente invention;

La figure 2b est une vue en coupe illustrant l'interface encliquetable entre une canalisation principale et une canalisation d'extrémité d'un réservoir selon la présente invention;

Les figures 3a et 3b sont des vues en perspective du réservoir de véhicule automobile selon la présente invention montrant la canalisation d'extrémité respectivement en position rangée et en position de montage;

Les figures 4a et 4b sont des vues en perspective illustrant des variantes de réalisation d'une interface encliquetable de type coudée.

Les éléments identiques, similaires, ou analogues conservent la même référence d'une figure à l'autre.

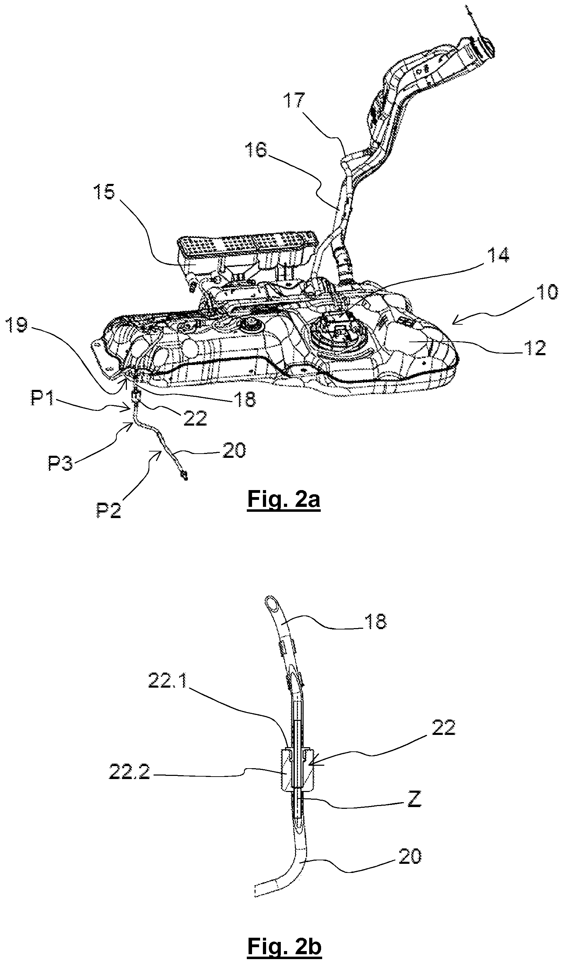

La figure 2a montre un réservoir à carburant 10 destiné à être implanté sous le châssis d'un véhicule automobile, notamment à proximité d'un train arrière, sous les places des passagers arrières.

Le réservoir à carburant 10 comporte une enveloppe 12, ici de forme allongée, définissant un espace de remplissage de carburant, et un module jauge-pompe 14 permettant de fournir une indication sur la quantité du contenu du réservoir 10 et d'alimenter les circuits du système d'injection du moteur thermique via des canalisations.

Une tubulure de remplissage 16 de carburant part du réservoir 10 et se termine à proximité d'une ouverture prévue dans un panneau externe de la carrosserie (non représenté). Un boîtier de trappe de remplissage disposé dans l'ouverture du panneau est conçu pour recevoir l'extrémité de la tubulure de remplissage 16. En outre, un tuyau de dégazage 17 débouchant d'une part dans le réservoir 10 et d'autre part dans la tubulure 16 permet d'évacuer l'air contenu dans l'enveloppe 12 du réservoir 10 lors du remplissage du réservoir 10.

Un dispositif absorbeur de vapeurs d'hydrocarbures 15, dit "canister", a un rôle de filtre qui absorbe et retient les vapeurs de carburant générées dans le réservoir 10 au cours de l'utilisation du véhicule automobile. Ce dispositif 15 permet de répondre aux normes antipollution.

Une canalisation principale 18 est connectée par une de ses extrémités au module-jauge pompe 14 et s'étend le long de l'enveloppe 12. Des agrafes et/ou des rainures ménagées dans l'enveloppe 12 permettent d'assurer un maintien de la canalisation principale 18 contre le réservoir 10. Une portion d'extrémité de la canalisation principale 18 est fixée à une zone d'encliquetage 19 ménagée dans une partie verticale du réservoir 10.

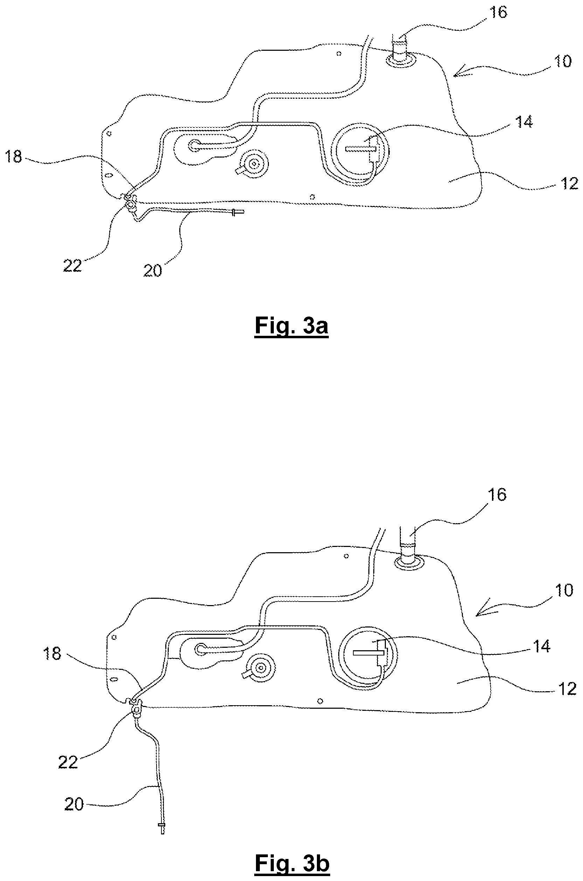

Une canalisation d'extrémité 20 est connectée à la canalisation principale 18 par l'intermédiaire d'une interface encliquetable 22 autorisant au moins un degré de rotation de la canalisation d'extrémité 20 autour d'un axe Z par rapport à la canalisation principale 18. La canalisation d'extrémité 20 peut ainsi passer sélectivement, par rotation autour de l'axe Z de l'interface 22, d'une position rangée dans laquelle la canalisation d'extrémité 20 s'étend le long de l'enveloppe 12, tel que montré sur la figure 3a, à une position de montage dans laquelle la canalisation d'extrémité 20 est écartée de l'enveloppe 12, tel que montré sur la figure 3b.

Les canalisations 18 et 20 réalisées dans un matériau plastique sont des canalisations lisses dont l'épaisseur est maîtrisée lors de la fabrication. Les canalisations 18, 20 pourront être obtenues par un procédé d'extrusion suivi d'une opération de formage à chaud réalisée par vapeur ou au four. La canalisation d'extrémité 20 pourra présenter par exemple une longueur comprise entre 50cm et 1m.

Avantageusement, l'interface encliquetable 22 est constituée, dans l'exemple représenté sur la figure 2b, d'un embout mâle 22.1 monté sur la canalisation principale 18 et destiné à s'insérer dans un embout femelle 22.2 monté sur la canalisation d'extrémité 20. En variante, la configuration est inversée, c'est-à-dire que l'embout femelle 22.2 est monté sur la canalisation principale 18 et l'embout mâle 22.1 est monté sur la canalisation d'extrémité 20.

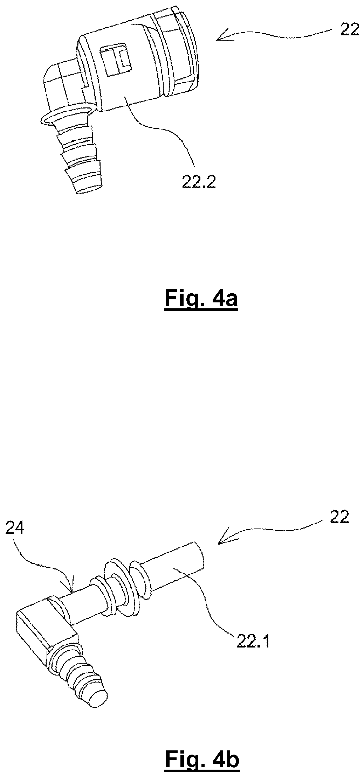

L'interface encliquetable 22 pourra être droite, tel que cela est représenté sur la figure 2b. Alternativement, l'interface encliquetable 22 pourra être coudée, notamment d'un angle de 90°, comme cela est montré sur les figures 4a et 4b.

Une configuration coudée de l'interface 22 permet de faciliter la réalisation des canalisations 18, 20 qui pourront présenter des formes droites uniquement. En effet, comme on peut le voir sur la figure 2a, les canalisations 18, 20 présentent une portion P1 verticale du fait de l'intégration du réservoir 10 sous une marche du plancher du véhicule sous les places arrière et une portion P2 horizontale s'étendant le long du plancher. Les deux portions P1 et P2 sont reliées entre elles par une portion coudée P3. Cette portion coudée P3 pourra être réalisée soit par la mise en forme de la canalisation 20, soit par l'utilisation d'une interface d'encliquetage 22 coudée.

Dans le cas de l'utilisation d'une interface 22 coudée, on pourra utiliser un embout femelle 22.2 coudé, tel que cela est illustré sur la figure 4a, ou un embout mâle 22.1 coudé, tel que cela est illustré sur la figure 4b.

L'interface encliquetable 22 pourra également comporter une zone d'agrafage 24, notamment ménagée dans l'embout mâle 22.1, comme cela est visible sur la figure 4b. Cette zone d'agrafage 24 permet d'assurer la fixation de la canalisation d'extrémité 20 sur le réservoir 10, notamment dans la zone d'encliquetage 19. En variante, une zone d'agrafage 24 est ménagée dans l'embout femelle 22.2.

La canalisation d'extrémité 20 est connectée à une canalisation d'alimentation du moteur thermique via son extrémité libre sur laquelle est monté un connecteur adapté.

Ainsi, en sortie d'usine et lors d'une phase de conditionnement, la canalisation d'extrémité 20 est mise en position rangée le long de l'enveloppe 12, comme cela est représenté sur la figure 3a. La canalisation d'extrémité 20 pourra être maintenue contre l'enveloppe 12 notamment en glissant l'extrémité de la canalisation 20 derrière un tuyau, ou au moyen d'une zone d'interface dédiée, ou d'un système d'accroche disposé autour de l'ensemble réservoir/canalisation, ou tout autre système de maintien adapté.

Lors du montage du moteur thermique, la canalisation d'extrémité 20 est tournée suivant l'interface encliquetable 22 de manière à passer en position de montage, afin de permettre son interconnexion avec le circuit d'alimentation du moteur thermique, tel que cela est montré sur la figure 3b.

Par ailleurs, on observe que l'ensemble réservoir/canalisation principale 18 pourra être standard et seule la canalisation d'extrémité 20 aura à être adaptée à la configuration du véhicule automobile et en particulier son empattement qui pourra varier d'un véhicule à l'autre. On facilite ainsi la réalisation du réservoir 10.

Il est à noter qu'en variante, le réservoir 10 pourra être un réservoir diesel, ou un réservoir contenant du liquide de dépollution, ou tout autre type de réservoir utilisé avec des canalisations pour acheminer son contenu vers un élément externe.

## Revendications

1. Réservoir (10) de véhicule automobile comportant:
- une enveloppe (12), et
- une canalisation principale (18),
edit réservoir (10) comportant en outre:
- une canalisation d'extrémité (20) connectée à la canalisation principale (18) par l'intermédiaire d'une interface (22) autorisant au moins un degré de rotation de la canalisation d'extrémité (20) par rapport à la canalisation principale (18),
- de sorte que la canalisation d'extrémité (20) peut passer sélectivement d'une position rangée dans laquelle la canalisation d'extrémité (20) s'étend le long de l'enveloppe (12) à une position de montage dans laquelle la canalisation d'extrémité (20) est écartée de l'enveloppe (12), **caractérisé en ce que** ladite interface (22) est une interface encliquetable.

2. Réservoir selon la revendication 1, **caractérisé en ce que** l'interface encliquetable (22) est constituée d'un embout mâle (22.1) associé à l'une des canalisations parmi la canalisation principale (18) et la canalisation d'extrémité (20) et destiné à s'insérer dans un embout femelle (22.2) associé à l'autre des canalisations parmi la canalisation principale (18) et la canalisation d'extrémité (20).

3. Réservoir selon la revendication 1 ou 2, **caractérisé en ce que** l'interface encliquetable (22) est droite.

4. Réservoir selon la revendication 1 ou 2, **caractérisé en ce que** l'interface encliquetable (22) est coudée, notamment d'un angle de 90°.

5. Réservoir selon la revendication 4, **caractérisé en ce que** l'interface encliquetable (22) comporte un embout femelle (22.2) coudé.

6. Réservoir selon la revendication 4 ou 5, **caractérisé en ce que** l'interface encliquetable (22) comporte un embout mâle (22.1) coudé.

7. Réservoir selon l'une quelconque des revendications 1 à 6, **caractérisé en ce que** l'interface encliquetable (22) comporte une zone d'agrafage (24) permettant d'assurer une fixation de la canalisation d'extrémité (20) sur le réservoir (10).

8. Réservoir selon l'une quelconque des revendications 1 à 7, **caractérisé en ce que** la canalisation principale (18) est connectée à un module-jauge pompe (14).

9. Réservoir selon l'une quelconque des revendications 1 à 8, **caractérisé en ce que** la canalisation d'extrémité (20) est connectée à une canalisation d'alimentation d'un moteur thermique.

10. Réservoir selon l'une quelconque des revendications 1 à 9, **caractérisé en ce que** le réservoir (10) est un réservoir à carburant.

## Patentansprüche

1. Kraftfahrzeugtank (10), umfassend :
- einen Umschlag (12) und
- ein Hauptrohr (18),
Reservoir (10) ferner umfasst:
- ein Endrohr (20), das mit dem Hauptrohr (18) über eine Schnittstelle (22) verbunden ist, die eine Drehung des Endrohrs (20) um mindestens einen Grad relativ zum Hauptrohr (18) zulässt,
- so dass das Endrohr (20) selektiv von einer verstauten Position, in der sich das Endrohr (20) entlang des Gehäuses (12) erstreckt, in eine Montageposition übergehen kann, in der das Endrohr (20) von dem Gehäuse (12) getrennt ist, **dadurch gekennzeichnet, dass** die Schnittstelle (22) eine Schnappschnittstelle ist.

2. Tank nach Anspruch 1, **dadurch gekennzeichnet, dass** die Schnappschnittstelle (22) aus einem männlichen Ende (22.1) besteht, das einem der Rohre unter dem Hauptrohr (18) und dem Endrohr (20) zugeordnet und dazu bestimmt ist in eine Anschlussbuchse (22.2) eingesetzt werden, die dem anderen der Rohre unter dem Hauptrohr (18) und dem Endrohr (20) zugeordnet ist.

3. Tank nach Anspruch 1 oder 2, **dadurch gekennzeichnet, dass** die Schnappschnittstelle (22) gerade ist.

4. Tank nach Anspruch 1 oder 2, **dadurch gekennzeichnet, dass** die Schnappschnittstelle (22) gebogen ist, insbesondere in einem Winkel von 90°.

5. Tank nach Anspruch 4, **dadurch gekennzeichnet, dass** die Schnappschnittstelle (22) ein gebogenes Buchsenende (22.2) aufweist.

6. Tank nach Anspruch 4 oder 5, **dadurch gekennzeichnet, dass** die Schnappschnittstelle (22) ein gebogenes Steckende (22.1) aufweist.

7. Tank nach einem der Ansprüche 1 bis 6, **dadurch gekennzeichnet, dass** die Schnappschnittstelle (22) eine Klemmzone (24) umfasst, die es ermöglicht, die Befestigung des Endrohrs (20) am Behälter (10) sicherzustellen.

8. Tank nach einem der Ansprüche 1 bis 7, **dadurch gekennzeichnet, dass** die Hauptleitung (18) mit einem Pumpenmessmodul (14) verbunden ist.

9. Tank nach einem der Ansprüche 1 bis 8, **dadurch gekennzeichnet, daß** das Endrohr (20) mit einem Versorgungsrohr einer Wärmekraftmaschine verbunden ist.

10. Tank nach einem der Ansprüche 1 bis 9, **dadurch gekennzeichnet, dass** der Tank (10) ein Kraftstofftank ist.

## Claims

1. Motor vehicle tank (10) comprising :
- an envelope (12), and
- a main pipe (18),
said reservoir (10) further comprising :
- an end pipe (20) connected to the main pipe (18) via an interface (22) allowing at least one degree of rotation of the end pipe (20) relative to the main pipe (18),
- so that the end pipe (20) can pass selectively from a stowed position in which the end pipe (20) extends along the casing (12) to a mounting position in which the end pipe (20) is separated from the casing (12), **characterized in that** said interface (22) is a snap -on interface.

2. Tank according to claim 1, **characterized in that** the snap-on interface (22) consists of a male end (22.1) associated with one of the pipes among the main pipe (18) and the end pipe (20) and intended to be inserted into a female connector (22.2) associated with the other of the pipes among the main pipe (18) and the end pipe (20).

3. Tank according to claim 1 or 2, **characterized in that** the snap-on interface (22) is straight.

4. Tank according to claim 1 or 2, **characterized in that** the snap-on interface (22) is bent, in particular at an angle of 90°.

5. Tank according to claim 4, **characterized in that** the snap-on interface (22) comprises a female end (22.2) bent.

6. Tank according to claim 4 or 5, **characterized in that** the snap-on interface (22) comprises a male end (22.1) bent.

7. Tank according to any one of claims 1 to 6, **characterized in that** the snap-on interface (22) comprises a clipping zone (24) making it possible to ensure fixing of the end pipe (20) on the tank (10).

8. Tank according to any one of Claims 1 to 7, **characterized in that** the main pipe (18) is connected to a pump gauge module (14).

9. Tank according to any one of claims 1 to 8, **characterized in that** the end pipe (20) is connected to a supply pipe of a heat engine.

10. Tank according to any one of claims 1 to 9, **characterized in that** the tank (10) is a fuel tank.
